# EUROPEAN PATENT SPECIFICATION

(11) **EP 2 311 293 B1**
(45) Date of publication and mention of the grant of the patent: **28.10.2015**
(21) Application number: 09803706.2
(22) Date of filing: 03.08.2009
(51) Int. Cl.: H04W 80/10, H04L 12/58, H04L 29/06

(54) **Methods, systems, and computer readable media for session initiation protocol (SIP) dialog identification**
Verfahren, Systeme und Computerlesbare Medien zur Dialogidentifikation für Sitzungseinleitungsprotokolle (SIP)
Procédés, systèmes et support assimilable par ordinateur pour l'identification de la boîte de dialogue du protocole d'ouverture de session (protocole SIP)

(30) Priority: 01.08.2008 US 85677 P
(43) Date of publication of application: 20.04.2011
(73) Proprietor: Tekelec, Inc., Morrisville, NC 27560 (US)
(72) Inventor: SPARKS, Robert, J, Plano TX 75023 (US)
(74) Representative: Skone James, Robert Edmund
(86) International application number: PCT/US2009/052600
(87) International publication number: WO 2010/014997

(56) References cited:
- EP-A1- 2 175 604
- WO-A1-2006/080806
- US-A1- 2005 276 386
- US-A1- 2006 189 340
- US-A1- 2008 089 344
- US-A1- 2008 089 344
- US-A1- 2008 162 634
- ROSENBERG J: "RFC 4538 - Request Authorization through Dialog Identification in the SIP", IETF STANDARD,, 30 June 2006 (2006-06-30), pages 1-17, XP008143478,
- ELWELL SIEMENS ENTERPRISE COMMUNICATIONS LIMITED J: "Connected Identity in the Session Initiation Protocol (SIP); draft-ietf-sip-connected-identity-05.txt", 20070225, vol. sip, no. 5, 25 February 2007 (2007-02-25), XP015049838, ISSN: 0000-0004
- J. ROSENBERG: 'RFC 4538 - Request Authorization through Dialog Identification in the SIP' IETF. 30 June 2006, pages 1 - 17, XP008143478
- J. ROSENBERG ET AL.: 'RFC 4235 - An INVITE-Initiated Dialog Event Package for the SIP' IETF. 30 November 2005, pages 1 - 39, XP015043182

## Description

### RELATED APPLICATIONS

This application claims the benefit of U.S. Provisional Patent Application Serial No. 61 /085,677 filed August 1, 2008.

### TECHNICAL FIELD

The subject matter described herein relates to session initiation protocol (SIP). More specifically, the subject matter relates to methods, systems, and computer readable media for SIP dialog identification.

### BACKGROUND

Session initiation protocol (SIP), specified in the Internet Engineering Task Force (IETF) RFC 3261, is used for call and session control of multimedia communication sessions between parties exchanging various forms of media, such as voice and video. A SIP network may include various SIP network elements for establishing and tearing down communications sessions. One such element includes a SIP user agent (UA). As used herein, a "SIP UA" or "UA" refers to a logical network endpoint used to communicate SIP messages. A UA may perform the role of a user agent client (UAC), which sends SIP requests, or a user agent server (UAS), which receives requests and returns SIP responses. Other SIP elements, such as a SIP proxy, may also be involved. As used herein, a "SLIP proxy" refers to an intermediary device in a SIP network that acts as both a server and a client for the purpose of making requests on behalf of other clients and primarily plays the role of routing messages to one or more associated devices.

An important concept in SIP is the use of transactions, dialogs, and calls. As used herein, a "SIP transaction" includes a request along with all associated responses up to a final (non-1xx) response. As used herein, a "SIP dialog" or "dialog" refers to a peer-to-peer SIP relationship between two UAs that persists for some time. Generally, a dialog may include a collection of SIP transactions. A dialog may be established by SIP messages, such as a 2xx response to an INVITE request. As used herein, "calls" and "sessions" may be used interchangeably. A SIP call or session may include multiple dialogs. For example, a session may include multiple user agents communicating with one user agent client. Such an example may result from forking which allows a single request message to be sent to and trigger response messages from multiple user agents. UAs typically attempt to establish a SIP dialog for facilitating sequencing and routing of messages between each other. UAs managed state information for each established dialog, including information to uniquely identify a dialog.

Conventional, a SIP dialog is identified at each UA by computing a dialog ID for each received message based on a combination of parameters, which include a Call-ID value, a local tag, and a remote tag. These parameters or values (but not the dialog ID, because it has local significance only) are generally included in every message sent after a dialog is established. While a Call-ID value may be the same for each UA in a dialog, the dialog ID is not the same for each UA because the tags used in the dialog ID are defined and interpreted relative to each UA. Specifically, the local tag value at a first UA (e.g., a UAC) is identical to the remote tag value at the peer UA (e.g., a UAS) and the local tag value at the peer UA (e.g., a UAS) is identical to the remote tag value at the first UA (e.g., a UAC). As such, the rules for constructing the dialog ID of a message depend on the SIP element receiving the message.

As described, conventional methods of SIP dialog identification present various shortcomings. One particular shortcoming is that the SIP protocol, as currently defined, does not specify a computed dialog ID parameter that is embedded within messages associated with a SIP dialog and used to uniquely identify these SIP messages as being associated with the same SIP dialog by both UAs. Instead, as stated above each UA must compute, for each received SIP message, a dialog ID using multiple SIP message parameter values. Consequently, the currently specified SIP mechanisms for identifying the dialog with which a SIP message is associated are computationally expensive and time consuming for SIP UAs, because dialog ID computation is repeated by each UA for each message.

Accordingly, in light of these difficulties, a need exists for improved methods, systems, and computer readable media for SIP dialog identification.

US 2008/089344 A1 (JANSSON MICHAEL [SE] ET AL) 17 April 2008 (2008-04-17) discloses background information;

US 2008-162634 A1 (JOHNS KEVIN C [US]) 3 July 2008 (2008-07-03) discloses background information;

ROSENBERG J: "RFC 4538 - Request Authorization through Dialog Identification in the SIP", IEFT STANDARD, 30 June 2006 (2006-06-30), pages 1-17, XP008143478, discloses background information; and

WO 2006/080806 A1 (SAMSUNG ELECTRONICS CO LTD [KR]; SUNG SANG-KYUNG [KR]; HAN JEA-HUN [KR]) 3 August 2006 (2006-08-03) discloses background information.

### SUMMARY

According to a first aspect of the invention there is provided a method as set out in claim 1.

According to a second aspect of the invention there is provided a system as set out in claim 7.

According to a third aspect of the invention there is provided a computer readable medium as set out in claim 13.

Exemplary computer readable media suitable for implementing the subject matter described herein include disk memory devices, chip memory devices, programmable logic devices, and application specific integrated circuits. In one implementation, the computer readable medium may include a memory accessible by a processor. The memory may include instructions executable by the processor for implementing any of the methods for SIP dialog identification described herein. In addition, a computer readable medium that implements the subject matter described herein may be located on a single device or computing platform or may be distributed across multiple devices or computing platforms.

### BRIEF DESCRIPTION OF THE DRAWINGS

The subject matter described herein will now be explained with reference to the accompanying drawings of which:
Figure 1 is a message flow diagram illustrating exemplary messages exchanged for generating and communicating a SIP dialog ID between SIP entities according to an embodiment of the subject matter described herein;
Figure 2 is a message flow diagram illustrating exemplary messages exchanged for generating and communicating a SIP dialog ID between SIP entities according to an alternate embodiment of the subject matter described herein;
Figure 3 is a flow diagram illustrating exemplary steps for generating and communicating SIP dialog ID between SIP entities from a dialog ID generator perspective according to an embodiment of the subject matter described herein;
Figure 4 is a flow diagram illustrating exemplary steps for generating and communicating SIP dialog ID between SIP entities from a dialog ID user perspective according to an embodiment of the subject matter described herein; and
Figure 5 is a block diagram of a SIP entity that generates, stores, and/or communicates a SIP dialog ID according to an embodiment of the subject matter described herein.

### DETAILED DESCRIPTION

The subject matter described herein includes methods, systems, and computer readable media for SIP dialog identification. As mentioned above, conventional SIP dialog identification involves the extraction and processing of three values or parameters typically found in every SIP message sent during a dialog between UAs. This parameter extraction and processing is performed de novo for each SIP message received by a SIP user agent. The parameters extracted and processed include a call-ID value and two tags, a local tag and a remote tag, where one tag is generated by each UA when establishing the dialog. A tag includes a token that is globally unique and random or pseudo-random for ensuring unique dialog IDs. The ability to fork SIP requests (i.e., the ability to allow multiple dialogs to be established from a single request) creates a need for a two-sided dialog identifier because without a contribution (i.e., a tag) from recipients, the requesting UA could not distinguish the multiple dialogs established from a single request. As such, tags are defined and maintained relative to a UA. For example, a local tag value for a UAC may be a remote tag value for a UAS and, similarly, a local tag value for the UAS may be a remote tag value for the UAC. As stated above, in conventional SIP network architectures, each time a message is received during a SIP dialog, the receiving UA needs to locate within the message and extract the three parameters. The three parameters extracted from the message are used to construct a dialog ID value for identifying a SIP dialog associated with message. This repetitive computation each time a message is received may be time and resource intensive, and, thus, inefficient for providing or communicating SIP dialog identification.

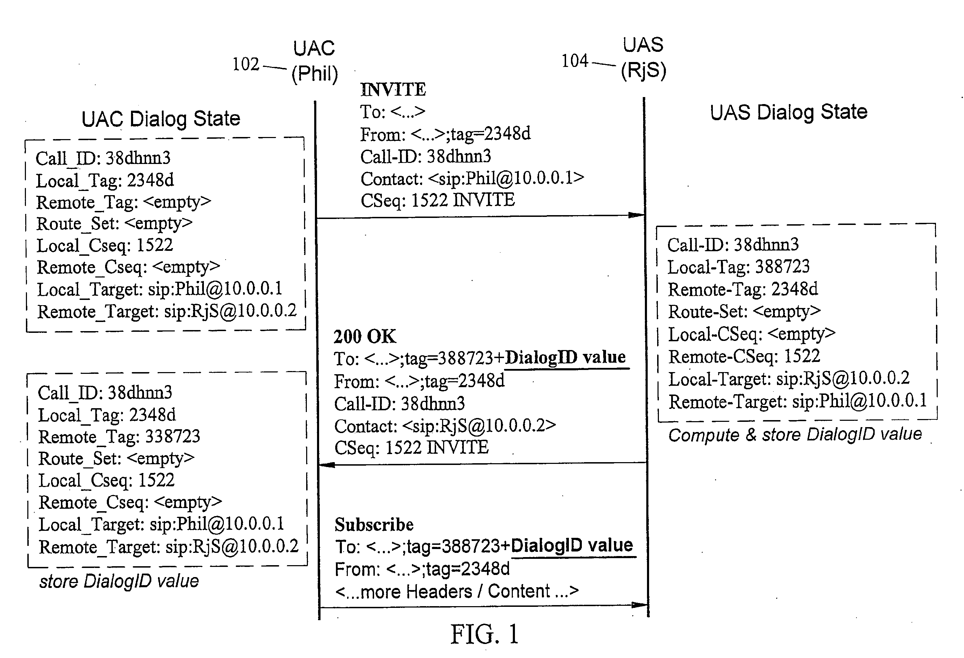

Accordingly, the subject matter described herein provides for SIP dialog identification, where a dialog ID computed by one SIP entity may be shared with and used by other SIP entities associated with a SIP dialog. The subject matter described herein provides a way for including the computed dialog ID in SIP messages associated with a SIP dialog. It is appreciated that one advantage of the subject matter described herein includes allowing a common computed dialog ID to be generated and used throughout a dialog's lifespan without having to compute or recompute the dialog ID every time a message is received at a UA associated with the SIP dialog. As a result, the time and processing resources expended by SIP user agents (or other SIP functional elements) for identifying SIP dialogs is reduced. The subject matter described herein will now be explained in greater detail with reference to Figures 1 through 5 below.

Figure 1 illustrates exemplary messages exchanged between a SIP UAC and a UAS, where the UAC and the UAS exchange and use a computed dialog ID according to an embodiment of the subject matter described herein. In this example, UA 102 wishes to establish a dialog with UA **104.** To establish the dialog, UA **102** generates a unique Call ID value and a unique local tag value which are included in the INVITE message and sends the INVITE message to UA **104.** UA **104** may receive the INVITE message and generate its own unique Local-tag value. Using the Call ID value, the Local-tag value provided by UA **102** and its own Local-tag value, UA **104** computes a unique dialog ID value. UA **104** associates the computed dialog ID value with the present SIP dialog and stores this dialog ID value. In one embodiment, shown in Figure 1, UA **104** is adapted to send a non-failure response message, such as a 200 OK message, back to UA **102,** thereby establishing a SIP dialog. In this embodiment, UA **104** embeds the computed dialog ID value in the 200 OK message, and thereby explicitly communicates the computed dialog ID value to UA **102.** In this example, the dialog ID value is appended to the "To" parameter in the 200 OK message. It will be appreciated that in other embodiments of the subject mater described herein, the dialog ID value can be appended / pre-pended / post-pended or generally included within any header parameter or within the body of the associated SIP message. UA **102** receives the 200 OK message and locates the embedded dialog ID value. UA **102** extracts the embedded dialog ID value, associates the extracted dialog ID value with the present SIP dialog, and stores this dialog ID value. Having identified and stored the dialog ID associated with the SIP dialog, both UA **102** and **104** may include the dialog ID value in some or all subsequent SIP messages associated with the SIP dialog. UA **102** and UA **104** also locate the embedded dialog ID value in each of these subsequent SIP messages and use this dialog ID value to rapidly identify these subsequent SIP messages as being associated with the present SIP dialog.

It should be appreciated that Figure 1 depicts a network configuration where both the originating user agent and the destination user agent are located on IP-based networks. However, the present subject matter may also be used in other networks that use or provide SIP functionality, including networks that convert SIP messages into other signaling protocols and vice versa. For example, a computed dialog ID may be used in an SS7 network to identify a SIP dialog.

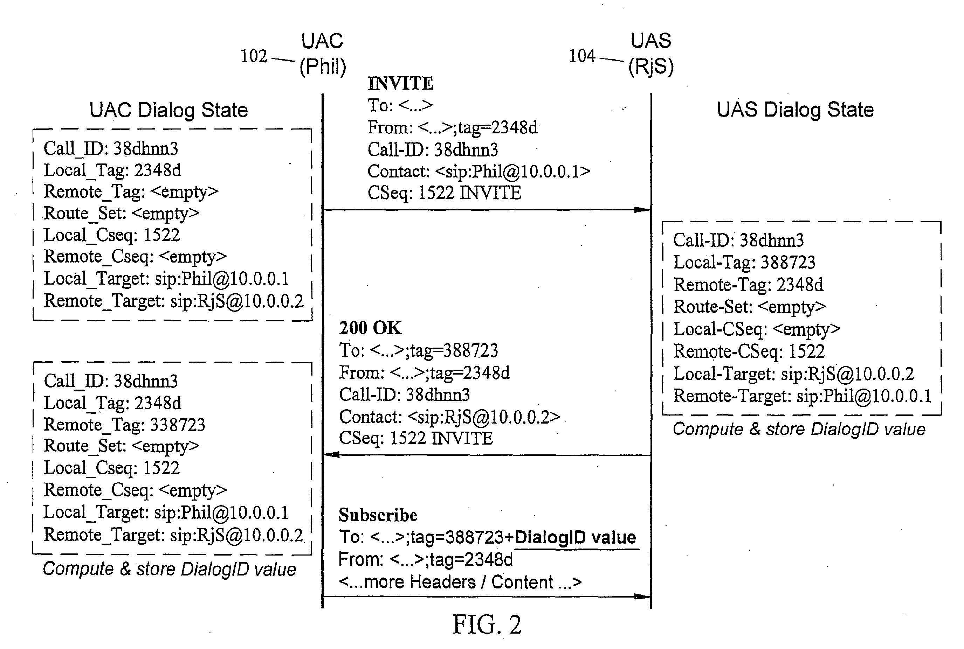

Figure 2 depicts an alternate embodiment of the present invention. In this example, UA **102** wishes to establish a dialog with UA **104.** To establish the dialog, UA **102** generates a unique Call ID value and a unique Local-tag value, which are included in the INVITE message, and sends the INVITE message to UA **104.** UA **104** may receive the INVITE message and generate its own unique Local-tag value. Using the Call ID value, the Local-tag value provided by UA **102** and its own Local-tag value, UA **104** computes a dialog ID value. UA **104** associates the computed dialog ID value with the present SIP dialog and stores this dialog ID value. UA **104** may send a non-failure response message, such as a 200 OK message, back to UA **102,** thereby establishing a SIP dialog. In this embodiment, UA **104** does not communicate the computed dialog ID value to UA **102,** and instead simply provides UA **102** with its own Local-tag value (i.e., the Local-tag value generated by UA **104).** UA **102** receives the 200 OK message and extracts the Call ID value, the Local-tag value provided by UA **104** and its own Local-tag value (provided in the 200 OK message as the Remote-tag value). Using these extracted values, UA **102** computes a dialog ID value, which is the same as the dialog ID value previously computed and stored by UA **104.** UA **102** associates the computed dialog ID value with the present SIP dialog and stores this dialog ID value. Having computed and stored the dialog ID associated with the SIP dialog, both UA **102** and **104** include the dialog ID value in some or all subsequent SIP messages associated with the SIP dialog. UA **102** and UA **104** may also locate the embedded dialog ID value in these subsequent SIP messages and to use this dialog ID value to rapidly identify these subsequent SIP messages as being associated with the present SIP dialog.

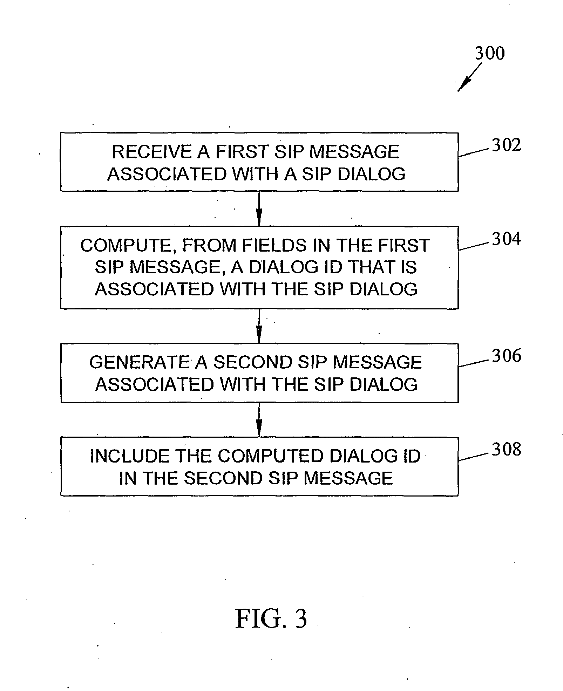

Figure 3 is a flow chart of a method **300** illustrating exemplary steps for SIP dialog identification according to an embodiment of the subject matter described herein. Referring to Figure 3, method **300** begins at block **302.** In block **302,** a first SIP message associated with a SIP dialog is received. For example, an initial INVITE message may be received at UAS **104.**

In block **302,** a dialog ID that is associated with the SIP dialog is computed using fields of the first SIP message. For example, the INVITE message from the above examples may contain a Call-ID field and a tag parameter in a "From" field. UAS **104** may extract these values. UAS **104** may also generate a second tag value that is not determinable from the first SIP message. Using these three values, UAS **104** may compute the dialog ID based on a cryptographic hash function. For example, the computed dialog ID value may be globally unique and cryptographically random.

In block **304,** a second SIP message associated with the SIP dialog is generated. For example, UAS **304** may generate a response SIP message, such as a 200 OK message, for indicating that the SIP INVITE has been received and accepted. In block **306,** the computed dialog ID is included in the second message. For example, UAS **104** may include a computed dialog ID in the 200 OK message from the above example. When the 200 OK response message is received, UAC **102** may locate, retrieve, and associate the computed dialog ID with the SIP dialog. Thereafter, the computed dialog ID may be included in subsequent SIP messages generated by UAC **102** or UAS **104** that are associated with the SIP dialog. In one embodiment, a SIP dialog ID value may be placed within a "To" header. In another embodiment, a dialog ID value may be stored in its own dialog ID parameter (e.g., in a Dialog_ID parameter in the header portion of a SIP message). In other embodiments of the present invention, a SIP dialog ID value may be included within any header parameter or the body of the SIP message.

Although the examples described above relate to a UAS compute or generate a dialog ID value, the subject matter described herein is not limited to such an embodiment. The present subject matter allows for other SIP elements to compute or generate a dialog ID value. For example, UAC **102** may compute or generate a dialog ID value. In such an example, UAC **102** may extract a remote tag value from a response message to an initial INVITE message. UAC **102** may compute a dialog ID value and send the computed dialog ID in an ACK message to UAS **104.** UAS **104** may use the computed dialog ID value similar to UAC **102** in the description above relating to Figure 1.

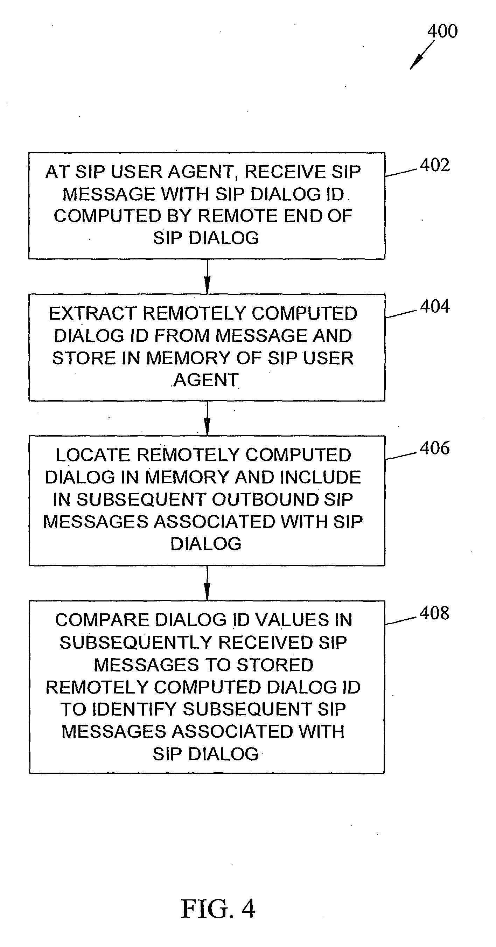

In Figure 3, the steps are illustrated from the perspective of the entity that first computes a dialog ID value based on parameters and a received SIP message and at least one locally generated parameter. However, the subject matter described herein is not limited to this perspective. For example, in the message illustrated in Figure 1, from the UAC perspective, there is no computation of a dialog ID value by the UAC. The UAC simply receives the remotely computed dialog ID value from the UAS and stores and uses that dialog ID value to identify subsequent messages associated with the SIP dialog. Figure 4 is flow chart illustrating exemplary steps that may be implemented by a SIP entity that receives a remotely computed dialog ID to identify SIP messages associated with the SIP dialog. Referring to Figure 4, a process **400** begins at step **402** where, at a SIP user agent, a SIP message with a SIP dialog ID computed by the remote end of a SIP dialog is received. For example, referring back to Figure 1, UAC **102** receives a remotely computed dialog ID value in the 200 OK message. In step **404,** the remotely computed dialog ID value is extracted from the received message and stored in the memory of the SIP user agent. For example, referring again to Figure 1, UAC **102** may extract and store the dialog ID value from the 200 OK message. Returning to Figure 4, in step **406,** the user agent may locate the remotely computed dialog ID in its memory and include the remotely computed dialog ID in subsequent outbound SIP messages (i.e., those generated by the user agent) associated with the SIP dialog. Returning to Figure 1, user agent client **102** may include the remotely computed dialog ID in the subscribe message sent to user agent server **104.**

Returning to Figure 4, in step **408,** the user agent compares dialog ID values and subsequently received SIP messages to stored remotely computed dialog ID to identify subsequent SIP messages associated with the SIP dialog. Returning to Figure 1, if UAC **102** receives a notify message from UAS **104** in response to the subscribe message, and the notify message includes a dialog ID, UAC **102** would compare the dialog ID value in the received notify message to the stored value to determine whether the notify message is associated with the same SIP dialog. Thus, using the steps illustrated in Figure 4, a SIP entity can use a remotely computed SIP dialog in messages that it originates and to identify messages that it receives as being associated with the SIP dialog. The entity is not required and may not compute a dialog ID value for the dialog.

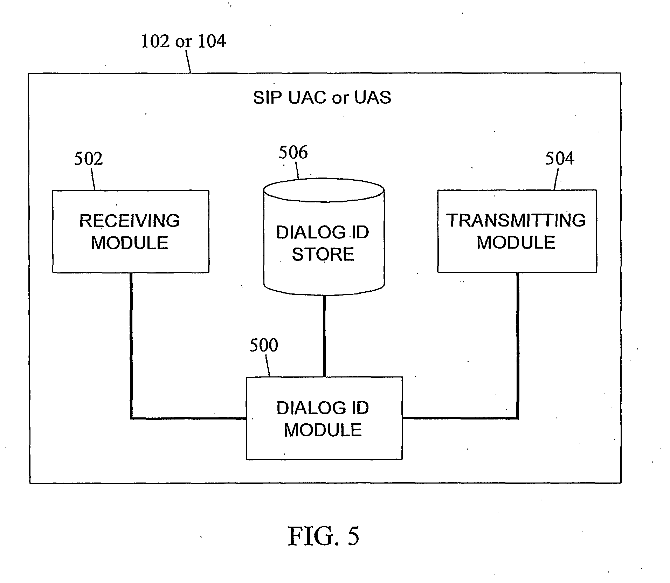

Figure 5 is a block diagram illustrating an exemplary SIP user agent client or user agent server **102** or **104** according to an embodiment of the subject matter described herein. Referring to Figure 5, SIP UAC or UAS **102** or **104** includes a dialog ID module **500** that performs the steps described herein for computing, storing, and including a dialog ID in subsequently generated SIP messages or for receiving a remotely computed dialog ID and using that dialog ID for identification of subsequent SIP messages associated with the SIP dialog and the generation of SIP messages associated with the SIP dialog. SIP UAC or UAS **102** or **104** also includes a receiving module **502** that receives SIP messages sent by the remote end of a SIP dialog and a transmitting module **504** for transmitting SIP messages to the remote end of the SIP dialog. SIP UAC or UAS **102** or **104** also includes a dialog ID store **506** that stores dialog IDs that are either computed by SIP UAC or UAS **102** or **104** or that are received and stored by SIP UAC or UAS **102** or **104.** Each of the modules illustrated in Figure 5 may be implemented by a computer programmed to perform the steps described herein for computing or using a SIP dialog ID. In addition, each of the modules and the dialog ID store illustrated in Figure 5 may be embodied in a computer readable medium, such as those described above.

It will be understood that various details of the subject matter described herein may be changed without departing from the scope of the subject matter described herein. Furthermore, the foregoing description is for the purpose of illustration only, and not for the purpose of limitation, as the subject matter described herein is defined by the claims as set forth hereinafter.

## Claims

1. A method for assigning and communicating a session initiation protocol, SIP, dialog identification, ID, in a communications network, the method comprising:
at a first SIP entity (104):
receiving (302), from a second SIP entity (102), a first SIP message associated with a SIP dialog, wherein the first SIP message is an INVITE message;
computing (304), using fields of the first SIP message, a dialog ID for identifying the SIP dialog;
generating (306) a second SIP message associated with the SIP dialog, wherein the second SIP message is a non-failure response message to the INVITE message;
including (308) the computed dialog ID in the second SIP message; and
transmitting the second SIP message to the second SIP entity (102) with the computed dialog ID positioned in the SIP message in a manner that triggers the second SIP entity (102) to extract the dialog ID from the second SIP message, associate the dialog ID with the present SIP dialog and use the dialog ID computed by the first SIP entity (104) to identify the SIP dialog.

2. The method of claim 1 wherein the first SIP entity (104) and second SIP entity (102) are user agents; and
the first SIP entity (104), second SIP entity (102) and any other SIP user agent elements associated with the SIP dialog utilize the same computed dialog ID to identify the SIP dialog.

3. The method of claim 1 wherein computing, using fields of the first SIP message, a dialog ID for identifying the SIP dialog includes using values from a call ID field and at least one tag parameter of the first SIP message.

4. The method of claim 3 wherein computing, using fields of the first SIP message, a dialog ID for identifying the SIP dialog includes using a second tag value that is not determinable from the first SIP message.

5. The method of claim 4 wherein the computed dialog ID is a function of the call ID value, the second tag value, and the tag value of the first SIP message.

6. The method of claim 1 wherein the first SIP entity (104) comprises a SIP user agent server, UAS, and the second SIP entity (102) comprises a SIP user agent client, UAC.

7. A system for assigning and communicating a session initiation protocol, SIP, dialog identification, ID, in a communications network, the system comprising:
a first SIP entity (104) including:
a receiving module (502) for receiving, from a second SIP entity (102), a first SIP message associated with a SIP dialog, wherein the first SIP message is an INVITE message; and
a dialog ID module (500) for computing, using fields of the first SIP message, a dialog ID for identifying the SIP dialog, generating a second SIP message associated with the SIP dialog, wherein the second SIP message is a non-failure response message to the INVITE message; and including the computed dialog ID in the second message;
wherein the dialog ID module (500) is configured for transmitting the second SIP message to the second SIP entity (102) with the computed dialog ID positioned in the SIP message in a manner that triggers the second SIP entity (102) to extract the dialog ID from the second SIP message, associate the dialog ID with the present SIP dialog and use the dialog ID computed by the first SIP entity (104) to identify the SIP dialog.

8. The system of claim 7 wherein the first SIP entity (104) and second SIP entity (102) are user agents; and
the first SIP entity (104), second SIP entity (102) and any other SIP user agent elements associated with the SIP dialog are configured to utilize the same computed dialog ID to identify the SIP dialog.

9. The system of claim 7 wherein computing, using fields of the first SIP message, a dialog ID for identifying the SIP dialog includes using values from a call ID field and at least one tag parameter of the first SIP message.

10. The system of claim 9 wherein computing, using fields of the first SIP message, a dialog ID for identifying the SIP dialog includes generating a second tag value that is not determinable from the first SIP message.

11. The system of claim 10 wherein the computed dialog ID is a function of the call ID value, the generated second tag value, and the tag value of the first SIP message.

12. The system of claim 7 wherein including the computed dialog ID in the second SIP message includes placing the computed dialog ID in the same To header of the second SIP message that is used for the address of the second SIP entity.

13. A computer readable medium having stored thereon computer executable instructions that when executed by the processor of a computer control the computer to perform the method of any of claims 1 to 6.

## Patentansprüche

1. Verfahren zum Zuordnen und Kommunizieren eines Sitzungseinleitungsprotokolls, SIP, einer Dialogidentifikation, ID, in einem Kommunikationsnetzwerk, wobei das Verfahren umfasst:
Eine erste SIP-Entität (104):
Empfangen (302), von einer zweiten SIP-Entität (102), einer mit einem SIP-Dialog assoziierten ersten SIP-Nachricht, wobei die erste SIP-Nachricht eine INVITE-Nachricht ist;
Computing (304), unter Verwendung von Feldern der ersten SIP-Nachricht, einer Dialog-ID zum Identifizieren des SIP-Dialogs;
Generieren (306) einer mit dem SIP-Dialog assoziierten zweiten SIP-Nachricht, wobei die zweite SIP-Nachricht eine ausfallsichere Antwortnachricht auf die INVITE-Nachricht ist;
Einbeziehen (308) der errechneten Dialog-ID in die zweite SIP-Nachricht; und
Senden der zweiten SIP-Nachricht an die zweite SIP-Entität (102), wobei die errechnete Dialog-ID in der SIP-Nachricht auf eine Weise positioniert ist, welche die zweite SIP-Entität (102) veranlasst, die Dialog-ID aus der zweiten SIP-Nachricht zu extrahieren, die Dialog-ID mit dem gegenwärtigen SIP-Dialog zu assoziieren und die von der ersten SIP-Entität (104) errechnete Dialog-ID zum Identifizieren des SIP-Dialogs zu verwenden.

2. Verfahren nach Anspruch 1, wobei die erste SIP-Entität (104) und die zweite SIP-Entität (102) "User Agents" (Anwenderagenten) sind; und
die erste SIP-Entität (104), die zweite SIP-Entität (102) und irgendwelche anderen mit dem SIP-Dialog assoziierten SIP- "User Agent" Elemente die gleiche errechnete Dialog-ID zum Identifizieren des SIP-Dialogs nutzen.

3. Verfahren nach Anspruch 1, wobei das Computing, unter Verwendung von Feldern der ersten SIP-Nachricht, eine Dialog-ID zum Identifizieren des SIP-Dialogs, die Verwendung von Werten aus einem Anruf-ID-Feld und wenigstens eines Tag-Parameters der ersten SIP-Nachricht einbezieht.

4. Verfahren nach Anspruch 3, wobei das Computing, unter Verwendung von Feldern der ersten SIP-Nachricht, eine Dialog- ID zum Identifizieren des SIP-Dialogs, die Verwendung eines zweiten Tag-Wertes einbezieht, der nicht aus der ersten SIP-Nachricht ermittelbar ist.

5. Verfahren nach Anspruch 4, wobei die errechnete Dialog-ID eine Funktion des Anruf-ID-Wertes, des zweiten Tag-Wertes und des Tag-Wertes der ersten SIP-Nachricht ist.

6. Verfahren nach Anspruch 1, wobei die erste SIP-Entität (104) einen SIP-User-Agent-Server, UAS, umfasst und die zweite SIP-Entität (102) einen SIP-User-Agent-Client, UAC, umfasst.

7. System zum Zuordnen und Kommunizieren eines Sitzungseinleitungsprotokolls, SIP, einer Dialogidentifikation, ID, in einem Kommunikationsnetzwerk, wobei das System umfasst:
Eine erste SIP-Entität (104), die einbezieht:
ein Empfangsmodul (502) zum Empfangen, von einer zweiten SIP-Entität (102), einer mit einem SIP-Dialog assoziierten ersten SIP-Nachricht, wobei die erste SIP-Nachricht eine INVITE-Nachricht ist; und
ein Dialog-ID-Modul (500) zum Computing, unter Verwendung von Feldern der ersten SIP-Nachricht, einer Dialog-ID zum Identifizieren des SIP-Dialogs, Generieren einer zweiten mit dem SIP-Dialog assoziierten zweiten SIP-Nachricht, wobei die zweite SIP-Nachricht eine ausfallsichere Antwortnachricht auf die INVITE-Nachricht ist; und Einbeziehen der errechneten Dialog-ID in die zweite Nachricht;
wobei das Dialog-ID (500) konfiguriert ist, die zweite SIP-Nachricht an die zweite SIP-Entität (102) zu senden, wobei die errechnete Dialog-ID in der SIP-Nachricht auf eine Weise positioniert ist, welche die zweite SIP-Entität (102) veranlasst, die Dialog-ID aus der zweiten SIP-Nachricht zu extrahieren, die Dialog-ID mit dem gegenwärtigen SIP-Dialog zu assoziieren und die von der ersten SIP-Entität (104) errechnete Dialog-ID zum Identifizieren des SIP-Dialogs zu verwenden.

8. System nach Anspruch 7, wobei die erste SIP-Entität (104) und die zweite SIP-Entität (102) "User Agents" (Anwenderagenten) sind; und
die erste SIP-Entität (104), die zweite SIP-Entität (102) und irgendwelche anderen mit dem SIP-Dialog assoziierten SIP- "User Agent" Elemente konfiguriert sind, die gleiche errechnete Dialog-ID zum Identifizieren des SIP-Dialogs nutzen.

9. System nach Anspruch 7, wobei das Computing, unter Verwendung von Feldern der ersten SIP-Nachricht, einer Dialog-ID zum Identifizieren des SIP-Dialogs, die Verwendung von Werten aus einem Anruf-ID-Feld und wenigstens eines Tag-Parameters der ersten SIP-Nachricht einbezieht.

10. System nach Anspruch 9, wobei das Computing, unter Verwendung von Feldern der ersten SIP-Nachricht, eine Dialog- ID zum Identifizieren des SIP-Dialogs, das Generieren eines zweiten Tag-Wertes einbezieht, der nicht aus der ersten SIP-Nachricht ermittelbar ist.

11. System nach Anspruch 10, wobei die errechnete Dialog-ID eine Funktion des Anruf-ID-Wertes, des generierten zweiten Tag-Wertes und des Tag-Wertes der ersten SIP-Nachricht ist.

12. System nach Anspruch 7, wobei das Einbeziehen der errechneten Dialog-ID in die zweite SIP-Nachricht das Platzieren der errechneten Dialog-ID in den gleichen "To" Header der zweiten SIP-Nachricht einbezieht, der für die Adresse der zweiten SIP-Entität verwendet wird.

13. Computerlesbares Medium mit darauf gespeicherten computerausführbaren Befehlen, die, wenn vom Prozessor eines Computers ausgeführt, den Computer steuern, um das Verfahren nach irgendeinem der Ansprüche 1 bis 6 auszuführen.

## Revendications

1. Procédé permettant d'attribuer et de communiquer une identification, ID, de la boîte de dialogue du protocole d'ouverture de session, SIP, dans un réseau de communications, le procédé comprenant les opérations consistant à :
au niveau d'une première entité SIP (104) :
recevoir (302), à partir d'une deuxième entité SIP (102), un premier message SIP associé à une boîte de dialogue SIP, cas dans lequel le premier message SIP est un message INVITE ;
calculer (304), grâce à l'utilisation de champs du premier message SIP, une ID de boîte de dialogue pour identifier la boîte de dialogue SIP ;
générer (306) un deuxième message SIP associé à la boîte de dialogue SIP, cas dans lequel le deuxième message SIP est un message de réponse de succès au message INVITE ;
inclure (308) l'ID calculée de la boîte de dialogue dans le deuxième message SIP ; et
transmettre le deuxième message SIP à la deuxième entité SIP (102), alors que l'ID calculée de la boîte de dialogue est positionnée dans le message SIP suivant une manière qui déclenche la deuxième entité SIP (102) pour l'obliger à extraire l'ID de la boîte de dialogue à partir du deuxième message SIP, à associer l'ID de la boîte de dialogue à l'actuelle boîte de dialogue SIP et à utiliser l'ID de la boîte de dialogue calculée par la première entité SIP (104) afin d'identifier la boîte de dialogue SIP.

2. Procédé selon la revendication 1, la première entité SIP (104) et la deuxième entité SIP (102) étant des agents utilisateurs ; et
la première entité SIP (104), la deuxième entité SIP (102) et n'importe quels autres éléments d'agents utilisateurs SIP associés à la boîte de dialogue SIP, utilisant la même ID calculée de la boîte de dialogue pour identifier la boîte de dialogue SIP.

3. Procédé selon la revendication 1, le calcul, grâce à l'utilisation de champs du premier message SIP, d'une ID de boîte de dialogue pour identifier la boîte de dialogue SIP incluant l'opération consistant à utiliser des valeurs provenant d'un champ d'ID d'appel et au moins un paramètre de balise du premier message SIP.

4. Procédé selon la revendication 3, le calcul, grâce à l'utilisation de champs du premier message SIP, d'une ID de boîte de dialogue pour identifier la boîte de dialogue SIP incluant l'opération consistant à utiliser une valeur de deuxième balise qui n'est pas déterminable à partir du premier message SIP.

5. Procédé selon la revendication 4, l'ID calculée de la boîte de dialogue étant fonction de la valeur de l'ID d'appel, de la valeur de la deuxième balise, et de la valeur de balise du premier message SIP.

6. Procédé selon la revendication 1, la première entité SIP (104) comprenant un serveur d'agent utilisateur SIP, UAS, et la deuxième entité SIP (102) comprenant un client d'agent utilisateur SIP, UAC.

7. Système pour attribuer et communiquer une identification, ID, de la boîte de dialogue du protocole d'ouverture de session, SIP, dans un réseau de communications, le système comprenant :
une première entité SIP (104) incluant :
un module de réception (502) pour recevoir, à partir d'une deuxième entité SIP (102), un premier message SIP associé à une boîte de dialogue SIP, cas dans lequel le premier message SIP est un message INVITE ; et
un module d'ID de boîte de dialogue (500) pour calculer, grâce à l'utilisation de champs du premier message SIP, une ID de boîte de dialogue pour identifier la boîte de dialogue SIP, générer un deuxième message SIP associé à la boîte de dialogue SIP, cas dans lequel le deuxième message SIP est un message de réponse de succès au message INVITE ; et inclure l'ID calculée de la boîte de dialogue dans le deuxième message ;
cas dans lequel le module d'ID de boîte de dialogue (500) est configuré de façon à transmettre le deuxième message SIP à la deuxième entité SIP (102), alors que l'ID calculée de la boîte de dialogue est positionnée dans le message SIP suivant une manière qui déclenche la deuxième entité SIP (102) pour l'obliger à extraire l'ID de la boîte de dialogue à partir du deuxième message SIP, à associer l'ID de la boîte de dialogue à l'actuelle boîte de dialogue SIP et à utiliser l'ID de la boîte de dialogue calculée par la première entité SIP (104) afin d'identifier la boîte de dialogue SIP.

8. Système selon la revendication 7, la première entité SIP (104) et la deuxième entité SIP (102) étant des agents utilisateurs ; et
la première entité SIP (104), la deuxième entité SIP (102) et n'importe quels autres éléments d'agents utilisateurs SIP associés à la boîte de dialogue SIP, étant configurés de façon à utiliser la même ID calculée de la boîte de dialogue pour identifier la boîte de dialogue SIP.

9. Système selon la revendication 7, le calcul, grâce à l'utilisation de champs du premier message SIP, d'une ID de boîte de dialogue pour identifier la boîte de dialogue SIP, incluant l'opération consistant à utiliser des valeurs provenant d'un champ de l'ID d'appel et au moins un paramètre de balise du premier message SIP.

10. Système selon la revendication 9, le calcul, grâce à l'utilisation de champs du premier message SIP, d'une ID de boîte de dialogue pour identifier la boîte de dialogue SIP, incluant l'opération consistant à générer une deuxième valeur de balise qui n'est pas déterminable à partir du premier message SIP.

11. Système selon la revendication 10, l'ID calculée de la boîte de dialogue étant fonction de la valeur de l'ID d'appel, de la valeur de la deuxième balise ayant été générée, et de la valeur de balise du premier message SIP.

12. Système selon la revendication 7, l'inclusion de l'ID calculée de la boîte de dialogue dans le deuxième message SIP incluant l'opération consistant à placer l'ID calculée de la boîte de dialogue dans le même en-tête « À » du deuxième message SIP qui est utilisé pour l'adresse de la deuxième entité SIP.

13. Support lisible par ordinateur sur lequel sont stockées des instructions exécutables par ordinateur qui, lors de leur exécution par le processeur d'un ordinateur, commandent l'ordinateur pour que celui-ci réalise le procédé selon l'une quelconque des revendications 1 à 6.
